# EUROPEAN PATENT SPECIFICATION

(11) **EP 0 368 601 B1**
(45) Date of publication and mention of the grant of the patent: **02.02.1994**
(21) Application number: 89311491.8
(22) Date of filing: 07.11.1989
(51) Int. Cl.: B65D 25/16

(54) **Food product packaging**
Verpackung eines Nahrungsmittels
Emballage d'un produit alimentaire

(30) Priority: 07.11.1988 GB 8825999
(43) Date of publication of application: 16.05.1990
(73) Proprietor: UNITED BISCUITS (UK) LIMITED, West Drayton, Middlesex UB7 6PR (GB)
(72) Inventor: Wilkes, Malcolm Stuart, Cookham Dean Berkshire SL6 9NZ (GB); Evans, Garfield George, North Moreton Oxfordshire OX11 9AX (GB)
(74) Representative: Ackroyd, Robert

(56) References cited:
- WO-A-87/00506
- FR-A- 2 595 211
- US-A- 4 590 078

## Description

This invention relates to the packaging of food products and, more particularly, is concerned with methods for the manufacture of packages which contain food products.

An important purpose of the invention is to provide methods for packaging food products so that the packages with their contents can be stored at room temperature. If this purpose can be achieved, the packaged food products do not need to be stored under reduced temperature conditions, thus avoiding the capital and running costs of both chill cabinets and deep freeze units, for instance. Another important purpose of the invention is to provide methods for packaging food products so that the packages with their contents can be stored satisfactorily over long periods, i.e. at room temperature, and, when required for consumption, the food products can be easily and simply heated or otherwise treated, in order to make them ready for use. This heating or other preparation stage is desirably carried out whilst the food products are still contained in the packages, if required after removal or displacement of one or more of the components of the packages. Yet a further important purpose of the invention is to provide methods for packaging food products so that the packages with their contents, when heated or otherwise treated in order to make the food products ready for use as just mentioned, are of a very high eating quality and avoid most or all of the defects which are commonly found with food products which have been stored for long periods and then heated or otherwise treated to become ready for consumption.

Many attempts have been made, with varying degrees of success, to package food products so that they are suitable for room temperature storage, have a long shelf-life and can be made ready for consumption in an easy and simple manner so as to simulate , as far as possible, a high quality fresh product which has just been made and prepared for consumption. For instance, prior attempts include the manufacture of sterilised bakery goods which are packaged in sealed cans. However this packaging process does not allow products to be made which have a crust or a baked colour, when the products are prepared for consumption. One reason for this is that the products completely fill the cans, so that there is no atmosphere in contact with the food product contents. Heat energy is transferred by conduction in a high humidity environment, which does not allow a crust or a natural baked colour and texture to be formed. One way in which these difficulties could be overcome would be to use, as a component of a package for a food product, a paper which has a controlled porosity. This kind of paper is commonly used in the pharmaceutical industry, for packaging surgical and dental instruments, because these need to be heat-sterilised in their packages, before the latter are opened to allow the instruments to be used.

A food container can be envisaged, such as a tray, in which a food product is located. The container with its contents can be sealed with a web of a controlled porosity paper, or a plastics material with equivalent properties, using a heat seal where the periphery of the container is contacted by the periphery of the paper sheet. When heat sealing is effected in order to attach the paper to the container, the sealing medium located around the rim of the tray is rendered liquid and seeps or "wicks" into the paper, thus forming a seal as it cools and resets. By selecting a heat-resistant plastics material, such as a polyester, as the element of controlled porosity, the resultant package containing the food product is capable of being processed by passage through an oven. By enclosing a food item such as a baked food product in a tray-like container incorporating a paper or plastics element of controlled porosity, a long shelf-life for the packaged product can be obtained, because the baking step in the oven kills the vegetative micro-organisms associated with the product, whilst facilitating the escape of steam released from the baked products and therefore allowing the development of crust and a baked colour.

The porosity of the paper component can be selected so that it acts as a barrier to micro-organisms, as a result of which degeneration of the food product in the package is virtually eliminated, as the baking step kills the micro-organisms originally associated with it and the porous paper lid sealed to the package stops micro-organisms in the air from contaminating the product as it cools, after being removed from the oven. The paper achieves this result by acting as a microbial filter, which prevents the passage of micro-organisms, without preventing the passage of gas molecules, so that water vapour and air can still pass through the membrane represented by the paper sheet of controlled porosity.

Suitable porous papers and plastics sheets have Bendtsen porosities in the range 200 to 2000 cm³ min⁻¹, preferably 200 to 1500 cm³ min⁻¹, and more preferably 200 to 1000 cm³ min⁻¹, for example about 250 cm³ min⁻¹.

One suitable paper is that sold under the name Sterisheet AS/A3 by Wycombe Marsh Paper Mills Limited of High Wycombe, Buckinghamshire, HP11 1ES, England.

Another procedure used in the manufacture of food products, with a view to enabling them to be packaged for storage, particularly dough products which contain fillings, is to ensure that the products are stored under reduced partial pressures of oxygen. The reduced amount of oxygen in contact with the food products slows down the rate at which adverse sensory changes can take place. Also, it is known to use carbon dioxide as the or a component of the atmosphere which is in contact with a packaged food product, as this can provide desirable anti-microbial properties, which can further extend the shelf-life of the packaged products.

Known methods for atmosphere control, including atmosphere replacement, used in the manufacture of packaged food products fall into two main types:
(a) The package is subjected to reduced pressure in a sealable enclosure, e.g. by connecting the latter to a vacuum pump, and then the reduced pressure is returned to normal in the presence of the required gas. This technique is used, for instance, with thermoforming equipment.
(b) The products are packaged under the desired gas atmosphere in a form/fill/seal equipment.

Both of these known techniques have disadvantages. With type (a), there is a marked tendency for the controlled-porosity membrane to tear, when subjected to the sudden pressure changes across it as the pressure reduction and gas flushing steps are carried out; with type (b), a low level of gas transfer is achieved.

It has now been discovered that the gas atmosphere in a sealed package, comprising a container having a controlled-porosity element sealed to it, can be changed readily and that this step can be accomplished in a time sufficiently short to allow food product packaging methods to be devised and carried out industrially which make use of this discovery.

According to an aspect of this invention, a method of manufacture of a package comprising a food product in a container incorporating a controlled-porosity element of paper or plastics sheet and having a Bendtsen porosity in the range 200 to 2000 cm³ min⁻¹ is provided, wherein, after introduction of the food product into the container, the container is heated to bake the food product within it, the container and baked food product are subjected to a treating gas in an enclosure for a time at least sufficient to modify the atmosphere adjacent the food product and within the container, and the container is then sealed into a gas-proof envelope so as to maintain the treating gas atmosphere within the package.

The container and baked food product can be allowed to cool to ambient temperature prior to being subjected to the treating gas. Such cooling can take place in air without any danger of microbial contamination of the food product because entry of micro-organisms is prevented during that period by the controlled-porosity element. Atmospheric gases can however pass into the container during such cooling but are replaced by the treating gas in the subsequent stage of the method.

The treating gas is conveniently carbon dioxide, nitrogen, or a mixture, preferably containing at least 50% carbon dioxide by volume, thereof. Any other inert gas may however be used, in place of or in admixture with one or both gases. Mixtures of carbon dioxide and air, for example 80%/20% by volume, can also be used.

In all cases, the treating gas should contain not more than 5.0% oxygen by volume, preferably not more than 2.5% by volume and most preferably not more than 0.3% by volume. After treatment with the treatment gas, the container preferably contains not more than 5.0% oxygen by volume.

The treating gas is preferably at substantially atmospheric pressure. Typical flow rates of gas through the treatment zone fall in the range 40 to 300 dm³ min⁻¹ for example 80 dm³ min⁻¹. Sufficient replacement of oxygen within the container can be accomplished in a period of, typically, 1 minute. Longer time periods can however be used when desired, in accordance with the characteristics of the controlled-porosity element.

Conveniently, the sealing of the packing into the gas-proof envelope is carried out in a form/fill/seal machine, the gas-proof envelope being conveniently a plastics film.

Preferably, in carrying out the invention, the contents of the container are a filled dough product, which is placed in a tray forming the container, after which the controlled-porosity element such as paper acting as a molecular sieve is sealed to the periphery of the tray. Also, it is preferable for the baking step to be carried out in an oven. For instance, the package or, in practice, a supply of packages is passed into a baking oven on a band, so that each package is heated to the desired temperature for the desired time as it proceeds through the oven. The band desirably passes from the oven directly to a tunnel or other enclosed zone, in which the replacement atmosphere is located. This zone operates as a gas quenching region, i.e. a region in which gas transfer by diffusion from a gas atmosphere in which the product is placed is allowed. The method is desirably conducted so that the heated packages pass directly from the oven to the gas tunnel. This can conveniently be made to accommodate a length of the band conveying the packages such that each package is exposed to the replacement gas atmosphere for a length of time sufficient to enable the hot atmosphere around the food product in the package to be exchanged for the desired gas atmosphere, for example, nitrogen, carbon dioxide or a mixture thereof. The invention is founded upon the surprising discovery that a residence or exposure time in the gas atmosphere as short as 60 or 90 seconds, without any imposed change in pressure, can allow the desired change of atmosphere to occur. The packages then pass from the gas exchange zone to a secondary wrapping station, where each is placed in a gas-proof container such as an envelope, in order to preserve the exchanged atmosphere within and around each package. This wrapping station can be a thermoformer or a form/fill/seal machine.

The invention enables the production of crisp coloured baked products in packages, which have a long shelf-life, even when stored at room temperature as intended, and which can be reheated for use, in the package, in an oven, under a grill or in a microwave oven.

The invention will now be described further with reference to the drawing, in which:
Figure 1 is a side view, partly in section of a complete packed food product and,
Figure 2 is a schematic representation of apparatus for cooking and packing the food product.

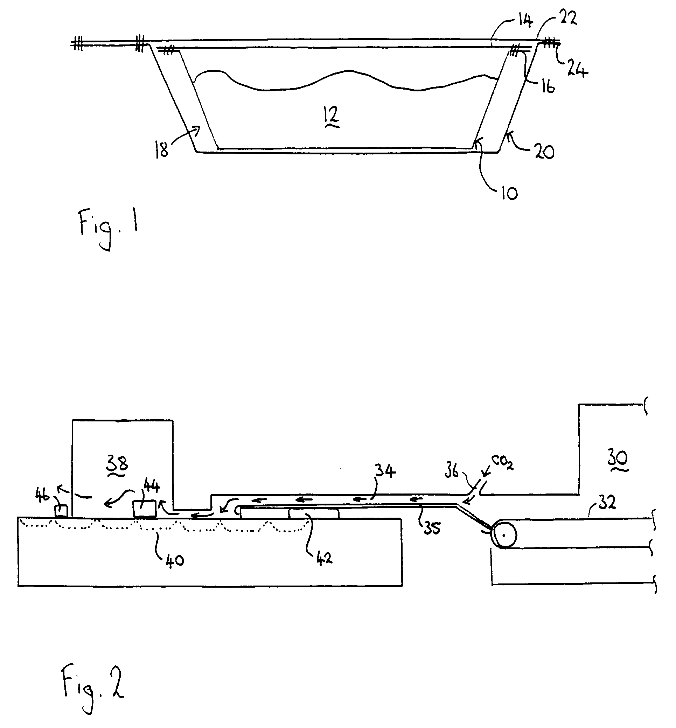

The package shown in Figure 1 consists of an impermeable paper tray 10 containing a food product 12. The tray 10 is closed by a web 14 of controlled-porosity paper which is sealed to the rim 16 of the tray. The sealed tray is contained within a well 18 in packaging tray 20 of impermeable plastics which is closed by an impermeable web 22 of plastics which is heat-sealed to the rim 24 of the tray 20.

Figure 2 schematically shows part of an oven 30 and its baking band 32. The oven is immediately adjacent a gas-treatment zone in the form of a tunnel 34, through which a further band or conveyor belt 35 extends, the return run of the belt and its drive mechanism being omitted for simplicity. The tunnel 34 has an inlet 36 for carbon dioxide. The belt 35 extends into a packaging machine 38. This is also flushed by the treatment gas, which follows the path shown by the arrows and eventually escapes from the packaging machine 38 into the atmosphere. An air-lock (not shown) between the oven 30 and the tunnel 34 prevents flow of flushing gas into the oven.

The packaging machine consists, in known manner, of a forming station 42 in which plastics film from a supply roll (not shown) is formed into the continuous array of packaging trays 40 corresponding to the tray 20 of Figure 1. The trays 40 are conveyed by means not shown to a sealing station 44 where a sealing film of plastics material, corresponding to the web 22 of Figure 1, is applied and heat-sealed, again in a known manner, to the trays 40 which are eventually separated into individual packages by a guillotine 46.

In use of the apparatus shown in Figure 2, food products 12 sealed in trays 10 (as shown in Figure 1) by controlled-porosity paper webs 14 are cooked in the oven 30 and then conveyed on the belt 35 through the tunnel 34, at the end of which they fall into the trays 40 between the forming and sealing stations 42, 44 of the packaging machine 38.

EP-A-0368602 describes food products which can constitute the food product of the package of this application. EP-A-0368603 describes food products having particular properties and which can constitute the food product of the package of this application.

## Claims

1. A method of manufacture of a package comprising a food product (12) in a container (10) incorporating a controlled-porosity element (14) of paper or plastics sheet and having a Bendtsen porosity in the range 200 to 2000 cm³ min⁻¹, in which, after introduction of the food product into the container and sealing of the container, the container is heated to bake the food product, the container and baked product are subjected to a treating gas in an enclosure for a time at least sufficient to modify the atmosphere adjacent the food product and within the container, and the container is sealed into a gas-proof envelope (20,22) so as to maintain the treating gas atmosphere within the container.

2. A method according to claim 1, in which the treating gas comprises carbon dioxide and/or nitrogen.

3. A method according to claim 1 or 2, in which the treating gas is at atmospheric pressure.

4. A method according to any preceding claim, in which the treating gas contains not more than 5.0% oxygen by volume.

5. A method according to claim 4, in which the treating gas contains not more than 2.5% oxygen by volume.

6. A method according to claim 5, in which the treating gas contains not more than 0.3% oxygen by volume.

7. A method according to any preceding claim, in which the container (10), after treatment with the treating gas, contains not more than 5.0% oxygen by volume.

8. A method according to any preceding claim, in which the container (10) is subjected to the treating gas for at least 60s, preferably at least 90s. treating gas for at least 60s, preferably at least 90s.

9. A method according to any preceding claim, in which the flow rate of gas through the treatment zone is from 40 to 300 dm³ min⁻¹.

10. A method according to any preceding claim, in which the container (10) and baked food product (12) are cooled to ambient temperature prior to being subjected to the treating gas.

11. A method according to any preceding claim, in which the container is subjected to the treating gas in an enclosure (34) which is immediately adjacent a heating means (30) in which the food product is baked.

12. A method according to claim 11, in which the baking and gas-treatment steps are carried out on the container (10) whilst the container is being conveyed on a conveyor means (32,35) through the heating means (30) and the gas-treatment enclosure (34).

13. A method according to any preceding claim, in which the controlled-porosity element (14) of paper or plastics sheet has a Bendtsen porosity in the range 200 to 1500 cm³ min⁻¹.

14. A method according to claim 13, in which the controlled-porosity element (14) of paper or plastics sheet has a Bendtsen porosity in the range 200 to 1000 cm³ min⁻¹.

## Patentansprüche

1. Verfahren zum Herstellen eines Pakets mit einem Nahrungsmittel (12) in einem Behälter (10), der ein Element (14) mit kontrollierter Porosität aufweist, das aus einer Papier- oder Kunststoffbahn besteht und eine Bendtsen-Porosität im Bereich von 200 bis 2000 cm³·min⁻¹ hat, wobei nach dem Einführen des Nahrungsmittels in den Behälter und Verschließen des Behälters dieser erwärmt wird, um das Nahrungsmittel wärmezubehandeln, wobei der Behälter und das wärmebehandelte Nahrungsmittel in einer Umhüllung einem Behandlungsgas für einen Zeitraum ausgesetzt werden, der zumindest ausreichend ist, die dem Nahrungsmittel benachbarte und innerhalb des Behälters befindliche Atmosphäre zu verändern, und wobei der Behälter in eine gasdichte Umhüllung (20, 22) eingeschlossen wird, um die Behandlungsgasatmosphäre innerhalb des Behälters aufrechtzuerhalten.

2. Verfahren nach Anspruch 1, wobei das Behandlungsgas Kohlenstoffdioxid und/oder Stickstoff enthält.

3. Verfahren nach Anspruch 1 oder 2, wobei das Behandlungsgas unter Normaldruck steht.

4. Verfahren nach einem der vorstehenden Ansprüche, wobei das Behandlungsgas nicht mehr als 5,0 Vol.-% Sauerstoff enthält.

5. Verfahren nach Anspruch 4, wobei das Behandlungsgas nicht mehr als 2,5 Vol.-% Sauerstoff enthält.

6. Verfahren nach Anspruch 5, wobei das Behandlungsgas nicht mehr als 0,3 Vol.-% Sauerstoff enthält.

7. Verfahren nach einem der vorstehenden Ansprüche, wobei der Behälter (10) nach der Behandlung mit dem Behandlungsgas nicht mehr als 5,0 Vol.-% Sauerstoff enthält.

8. Verfahren nach einem der vorstehenden Ansprüche, wobei der Behälter (10) mindestens 60 Sekunden, vorzugsweise mindestens 90 Sekunden dem Behandlungsgas ausgesetzt wird.

9. Verfahren nach einem der vorstehenden Ansprüche, wobei die Strömungsgeschwindigkeit des Gases durch die Behandlungszone von 40 bis 300 dm³·min⁻¹ beträgt.

10. Verfahren nach einem der vorstehenden Ansprüche, wobei der Behälter (10) und das wärmebehandelte Nahrungsmittel (12) vor dem Behandeln mit Behandlungsgas auf Umgebungstemperatur abgekühlt werden.

11. Verfahren nnach einem der vorstehenden Ansprüche, wobei der Behälter in einer Umhüllung (34) dem Behandlungsgas ausgesetzt wird, die einer Heizeinrichtung (30) unmittelbar benachbart ist, in der das Nahrungsmittel wärmebehandelt wird.

12. Verfahren nach Anspruch 11, wobei der Wärmebehandlungsschritt und der Gasbehandlungsschritt auf dem Behälter (10) ausgeführt werden, während der Behälter auf einer Transporteinrichtung (32, 35) durch die Heizeinrichtung (30) und die Gasbehandlungsumhüllung (34) transportiert wird.

13. Verfahren nach einem der vorstehenden Ansprüche, wobei das Element (14) mit gesteuerter Porosität aus einer Papier- oder Kunststoffbahn eine Bendtsen-Porosität im Bereich von 200 bis 1500 cm³·min⁻¹ aufweist.

14. Verfahren nach Anspruch 13, wobei das Element (14) mit gesteuerter Porosität aus einer Papier- oder Kunststoffbahn eine Bendtsen-Porosität im Bereich von 200 bis 1000 cm³·min⁻¹ aufweist.

## Revendications

1. Procédé pour fabriquer un emballage comprenant un produit alimentaire (12) dans un récipient (10), lequel comprend un élément à porosité controllée (14), en papier ou en une feuille en matière plastique et ayant une porosité Bendtsen de 200 à 2000 cm³ mn⁻¹, procédé dans lequel, après introduction du produit alimentaire dans le récipient et obturation du récipient, on chauffe le récipient pour cuire le produit alimentaire, on soumet le récipient et le produit cuit à un gaz de traitement dans une enceinte pendant un temps au moins suffisant pour modifier l'atmosphère au contact immédiat du produit alimentaire et se trouvant à l'intérieur du récipient, et le récipient est enfermé dans une enveloppe étanche aux gaz (20, 22) de façon à maintenir, à l'intérieur du récipient, l'atmosphère constituée du gaz de traitement.

2. Procédé selon la revendication 1, dans lequel le gaz de traitement comprend de l'anhydride carbonique et/ou de l'azote.

3. Procédé selon la revendication 1 ou 2, dans lequel le gaz de traitement est sous la pression atmosphérique.

4. Procédé selon l'une quelconque des revendications précédentes, dans lequel le gaz de traitement ne contient pas plus de 5,0 % en volume d'oxygène.

5. Procédé selon la revendication 4, dans lequel le gaz de traitement ne contient pas plus de 2,5 % en volume d'oxygène.

6. Procédé selon la revendication 5, dans lequel le gaz de traitement ne contient pas plus de 0,3 % en volume d'oxygène.

7. Procédé selon l'une quelconque des revendications précédentes, dans lequel le récipient (10), après traitement par le gaz de traitement, ne contient pas plus de 5,0 % en volume d'oxygène.

8. Procédé selon l'une quelconque des revendications précédentes, dans lequel le récipient (10) est soumis au gaz de traitement pendant au moins 60 secondes, de préférence pendant au moins 90 secondes.

9. Procédé selon l'une quelconque des revendications précédentes, dans lequel le débit du gaz traversant la zone de traitement est de 40 à 300 dm³ mn⁻¹.

10. Procédé selon l'une quelconque des revendications précédentes, dans lequel le récipient (10) et le produit alimentaire cuit (12) sont refroidis à la température ambiante avant d'être soumis au gaz de traitement.

11. Procédé selon l'une quelconque des revendications précédentes, dans lequel le récipient est soumis au gaz de traitement dans une enceinte immédiatement adjacente à un moyen de chauffage (30) dans lequel est cuit le produit alimentaire.

12. Procédé selon la revendication 11, dans lequel les étapes de cuisson et de traitement au gaz sont mises en oeuvre sur le récipient (10) tandis que le récipient, sur un moyen transporteur (32, 35), traverse le moyen de chauffage (30) et l'enceinte de traitement au gaz (34).

13. Procédé selon l'une quelconque des revendications précédentes, dans lequel l'élément à porosité contrôlée (14), en papier ou en une feuille de matière plastique, a une porosité Bendtsen de 200 à 1500 cm³ mn⁻¹.

14. Procédé selon la revendication 13, dans lequel l'élément à porosité contrôlée (14), en papier ou en une feuille de matière plastique, a une porosité Bendtsen de 200 à 1000 cm³ mn⁻¹.
